# EUROPÄISCHE PATENTSCHRIFT

(11) **EP 1 275 879 B1**
(45) Veröffentlichungstag und Bekanntmachung des Hinweises auf die Patenterteilung: **07.04.2010**
(21) Anmeldenummer: 02014138.8
(22) Anmeldetag: 25.06.2002
(51) Int. Cl.: F16H 3/093, F16H 47/06

(54) **Lastschaltbares Wendegetriebe**
Power shift transmission
Transmission commutable sous charge

(30) Priorität: 28.06.2001 DE 10131329
(43) Veröffentlichungstag der Anmeldung: 15.01.2003
(73) Patentinhaber: ZF Friedrichshafen AG, 88038 Friedrichshafen (DE)
(72) Erfinder: Huber, Tilo, 94034 Passau (DE); Leber, Fritz, 88048 Friedrichshafen (DE); Brehmer, Udo, 88069 Tettnang (DE)

(56) Entgegenhaltungen:
- DE-A1- 2 535 700
- DE-A1- 4 416 929
- DE-A1- 4 416 930
- US-A- 5 249 475

## Beschreibung

Die vorliegende Erfindung bezieht sich auf ein unter Last schaltbares, mehrgängiges Wendegetriebe für Baumaschinen gemäß dem Oberbegriff des Patentanspruchs 1 und wie es aus dem Dokument EP 0 759 129 B1 bekannt ist.

Derartige Wendegetriebe werden in vielen verschiedenen Fahrzeugen der Baumaschinenbranche verwendet. Typische Anwendungsbeispiele sind der Einsatz in Baggerladern, Gabelstaplern, Radladern, Telescopic-Handlern und auch in Kranfahrzeugen. Die Vielfalt der Fahrzeuge in diesem Bereich verlangt ein hohes Maß an Anpassungsfähigkeit des eingesetzten Getriebes, da die Einbaubedingungen in den verschiedenen Fahrzeugen höchst unterschiedlich ausfallen können.

Beispielsweise kann der zur Verfügung stehende Einbauraum extrem klein ausfallen. Ferner können unterschiedliche Achsabstände zwischen der Getriebeantriebswelle und der Getriebeabtriebswelle auftreten. Je nach Fahrzeugtyp ist demnach ein bestimmter Achsversatz zwischen der Ein- und Ausgangswelle des Getriebes erforderlich. Weiter wird in den meisten Einsatzbereichen mindestens ein Nebenantrieb benötigt, z.B. für die Hydraulik der Arbeitsmaschine. Die Aufgaben, die ein Wendegetriebe zu erfüllen hat, sind demnach bedingt durch die Bauart des Fahrzeugs sehr unterschiedlich. Diese Anforderungen müssen innerhalb der axialen Baulänge und Breite des Getriebes erfüllt werden.

Aus der EP 0 759 129 B1 ist ein lastschaltbares Wendegetriebe bekannt, dass durch die Aufteilung von Schaltkupplungen, Festrädern und Losrädern auf mehrere Vorgelegewellen einen Antriebsrädersatz und einen Verteilerrädersatz aufweist, womit lange und kurze Achsabstände realisiert werden können. Für lange Achsabstände ist vorgesehen, die Vorgelegewellen im wesentlichen zwischen der Antriebs- und der Abtriebswelle anzuordnen. Dabei sind je nach gewünschtem Gang unterschiedliche Kombinationen von Vorgelegewellen an der Kraftübertragung beteiligt. Bei kurzen Achsabständen werden die Vorgelegewellen im Kreis um die Antriebswelle herum positioniert, wodurch ihre Lage zueinander bereits vorbestimmt ist. Bei diesem Wendegetriebe werden demnach zur Realisierung verschiedener Achsabstände sich voneinander unterscheidende Wellenanordnungen vorgesehen.

Aufgabe der vorliegenden Erfindung ist es, ein lastschaltbares, mehrgängiges Wendegetriebe zu schaffen, das an verschiedene Einbausituationen angepaßt werden kann, dessen Wellenanordnung zur Überbrückung verschiedener Achsabstände geeignet ist und das bei der Anpassung an eine bestimmte Einbausituation nur wenig zusätzliche Bauteile erfordert.

Ausgehend von einem Wendegetriebe der eingangs näher genannten Art erfolgt die Lösung dieser Aufgabe mit den im kennzeichnenden Teil des Patentanspruchs angegebenen Merkmalen.

Erfindungsgemäß ist demnach vorgesehen, daß die einzelnen Wellen des Wendegetriebes zu einer Wendegetriebeeinheit (KV, KR, K4) und einer Ganggetriebeeinheit (K1, K2, K3) zusammengefasst sind, wobei die Wendegetriebeeinheit an einer beliebigen Seite der Antriebswelle vorgesehen ist und die Ganggetriebeeinheit an die Wendegetriebeeinheit anschließt, sodass die Wendegetriebeeinheit und die Ganggetriebeeinheit bezogen auf die Antriebswelle hintereinander auf einer Seite der Antriebswelle angeordnet sind.

Die Vorgelegeeinheiten können z.B. aus einer Vorgelegewelle, einer Schalteinrichtung und Los- bzw. Festrädern aufgebaut sein. Die Wendegetriebeeinheit besteht aus den Vorgelegeeinheiten für den Vorwärtsgang, den Rückwärtsgang und den vierten Gang. Die Ganggetriebeeinheit besteht aus den Vorgelegeeinheiten für den ersten, den zweiten und den dritten Gang. Vorzugsweise wird die Wendegetriebeeinheit an einer beliebigen Stelle des Umfangs der Antriebswelle vorgesehen, während die Ganggetriebeeinheit an die Vorgelegeeinheit des Rückwärtsgangs anschließt.

Auf diese Weise sind die Wellen der Wendegetriebeeinheit und die Antriebswelle sowie die Wellen der Ganggetriebeeinheit und die Welle des Rückwärtsgangs jeweils in einem Viereck angeordnet. Die Winkel dieser Vierecke können entsprechend den jeweiligen Anforderungen der vorgegebenen Einbausituation verändert werden.

Durch die Wellenanordnung des erfindungsgemäßen Wellengetriebes ist es möglich, sowohl kurze als auch lange Achsabstände zu verwirklichen, ohne die relative Lage der einzelnen Wellen zueinander verändern zu müssen. Allein durch die Variation der Abstände zwischen den einzelnen Wellen und der Winkel, die von den Verbindungslinien zwischen zwei Wellen gebildet werden, kann auf besondere Vorgaben eines bestimmten Fahrzeugtyps eingegangen werden.

Diese flexible Anordnung der Wellen kann erreicht werden ohne die am Kraftfluß beteiligten Komponenten austauschen zu müssen. Somit ist ein Höchstmaß an Wiederverwendbarkeit von Komponenten gewährleistet.

Gemäß einer bevorzugten Ausführungsform der Erfindung weist das Wendegetriebe neben der Antriebswelle einen Nebenabtrieb, beispielsweise einen PTO, auf. Der Einbau des PTO wird ermöglicht, da durch die erfindungsgemäße Anordnung der beiden Getriebeeinheiten auf einer Seite der Antriebswelle noch ausreichend Platz für einen PTO neben der Antriebswelle vorhanden ist. Vorzugsweise wird ein motorabhängiger Nebenabtrieb verwendet.

Für Fahrzeuge, die von dem Getriebe die Überbrückung noch größerer Distanzen verlangen, kann eine lange Abstandsvariante vorgesehen werden, wie sie z.B. mit einem Achsverteilergetriebe verwirklicht werden kann.

In einer weiteren bevorzugten Ausführungsform der Erfindung ist die Vorgelegeeinheit des vierten Gangs unabhängig von den übrigen Vorgelegeeinheiten neben der Antriebswelle angeordnet. Diese Vorgelegeeinheit kann bei Bedarf auch aus dem Wendegetriebe eliminiert werden. Ein derartiger Getriebeaufbau ist beispielsweise für Gabelstapler denkbar, die in der Regel nur über drei verschiedene Gänge verfügen. Der durch die herausgenommene Vorgelegeeinheit gewonnene Platz kann für einen zweiten Nebenabtrieb genutzt werden.

Durch die vorliegende Erfindung ist es demnach möglich, auf verschiedenste Getriebeanforderungen einzugehen und dabei das Grundgetriebekonzept beizubehalten. Dadurch können Material und Kosten gespart werden und das Getriebe ist leicht zu warten. Ferner kann ein bereits existierendes Getriebe leicht an neue Anforderungen angepaßt werden.

Im folgenden wird die Erfindung anhand der Zeichnung näher erläutert. In dieser stellen dar:
- Fig. 1: eine Darstellung eines Wendegetriebes nach dem Stand der Technik für kurze Achsabstände;
- Fig. 2: ein Getriebeschema eines Wendegetriebes gemäß der vorliegenden Erfindung;
- Fig. 3: eine Darstellung der Wellenanordnung eines erfindungsgemäßen Wendegetriebes mit kurzem Achsabstand;
- Fig. 4: eine Darstellung der Wellenanordnung eines erfindungsgemäßen Wendegetriebes mit langem Achsabstand und
- Fig. 5: eine schematische Darstellung eines erfindungsgemäßen Wendegetriebes mit Achsverteilergetriebe.

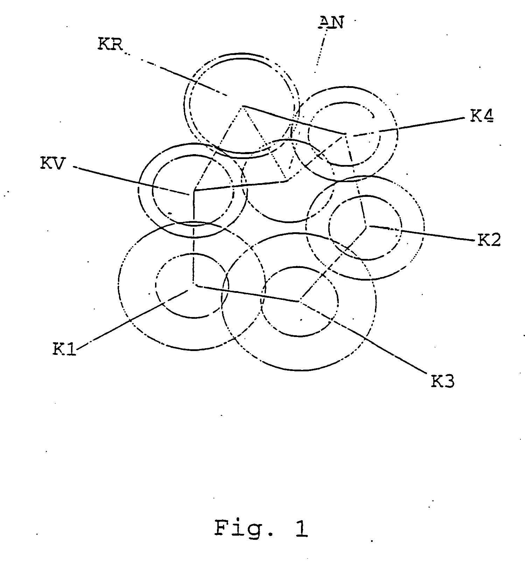

Fig. 1 zeigt ein Wendegetriebe nach dem Stand der Technik, das für kleine Achsabstände vorgesehen ist. Die Vorgelegewellen der Vorgeleeeinheiten für den Vorwärtsgang KV, den Rückwärtsgang KR, den ersten Gang K1, den zweiten Gang K2, den dritten Gang K3 und den vierten Gang K4 sind um die Antriebswelle AN herum angeordnet. Die Welle des dritten Ganges dient dabei als Abtriebswelle. Bei dieser Wellenanordnung verbleibt wenig Spielraum, um auf Besonderheiten verschiedener Einbausituationen eingehen zu können, da durch die kreisförmige Aufteilung der Getriebewellen wenig Flexibilität für eine Variation der Anordnung verbleibt.

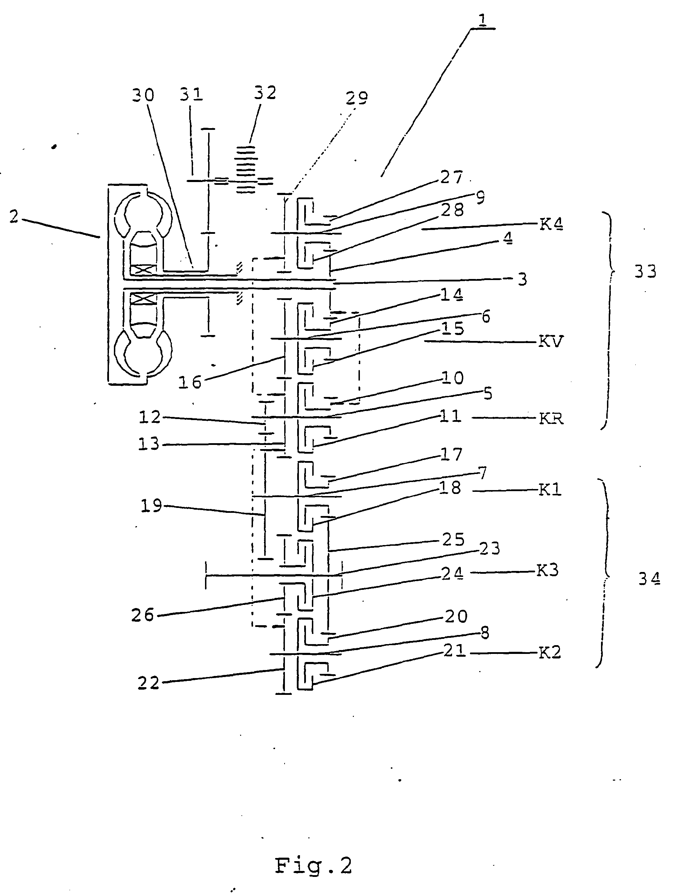

In Fig. 2 ist ein Wendegetriebe 1 nach der vorliegenden Erfindung gezeigt, bei dem von einem Drehmomentwandler 2 die Antriebsleistung eines Motors auf eine Hohlwelle 3 übertragen wird, welche die Antriebswelle darstellt. Auf der Hohlwelle 3 ist ein Festrad 4 angeordnet, über das die Antriebsleistung weitergegeben wird.

Weiter weist das Getriebe Vorgelegewellen 5, 6, 7, 8 und 9 auf, auf denen jeweils Festräder, Losräder und Kupplungselemente angeordnet sind und mit diesen mehreren Vorgelegeeinheiten bilden. Dabei wird die Vorgelegeeinheit für den Rückwärtsgang KR durch die Vorgelegewelle 5, das Losrad 10, das Kupplungselement 11, und die Festräder 12 und 13 gebildet. Die Vorgelegeeinheit des Vorwärtsgangs KV besteht aus der Vorgelegewelle 6, dem Losrad 14, dem Kupplungselement 15 und dem Festrad 16. Die Vorgelegeeinheit für den ersten Gang K1 wird durch die Vorgelegewelle 7, das Losrad 17, das Kupplungselement 18 und das Festrad 19 gebildet. Die Vorgelegeeinheit für den zweiten Gang K2 weist die Vorgelegewelle 8, das Losrad 20, die Kupplungseinheit 21 und das Festrad 22 auf. Die Vorgelegeeinheit für den dritten Gang K3 wird aus der Abtriebswelle 23, dem Kupplungselement 24, dem Festrad 25 und dem Losrad 26 gebildet. Die Vorgelegeeinheit für den vierten Gang besteht aus der Vorgelegewelle 9, dem Losrad 27, der Kupplungseinheit 28 und dem Festrad 29. Die Vorgelegeeinheit K4 ist bevorzugt neben der Antriebswelle 3 gelegen, wobei das Festrad 4 mit dem Losrad 27 kämmt.

Die Funktionsweise der Zahnräder und Kupplungen zum Schalten der unterschiedlichen Gänge und der entsprechenden Kraftfluß sind dem Fachmann wohlbekannt. Daher soll hier nicht weiter darauf eingegangen werden.

Vorzugsweise wird von dem Drehmomentwandler 2 eine weitere Hohlwelle 30 angetrieben, die einen Nebenantrieb 31 versorgt, der weit vorn am Getriebe angeordnet ist, damit eine für das Fahrzeug oder das Getriebe erforderliche Hydraulikpumpe 32 parallel zum Getriebe angeordnet werden kann. Damit wird der nötige Einbauraum für das Getriebe weiter reduziert, indem die axiale Baulänge auf ein minimales Maß sinkt.

Die Vorgelegeeinheiten KV, KR und K4 bilden eine Wendegetriebeeinheit 33 und die Vorgelegeeinheiten K1, K2 und K3 bilden eine Ganggetriebeeinheit 34, wobei die Vorgelegeeinheiten der Wendegetriebeeinheit 33 an einer Seite neben der Antriebswelle 3 vorgesehen sind und die Vorgelegeeinheiten der Ganggetriebeeinheit an die Vorgelegeeinheit KR des Rückwärtsgangs anschließen.

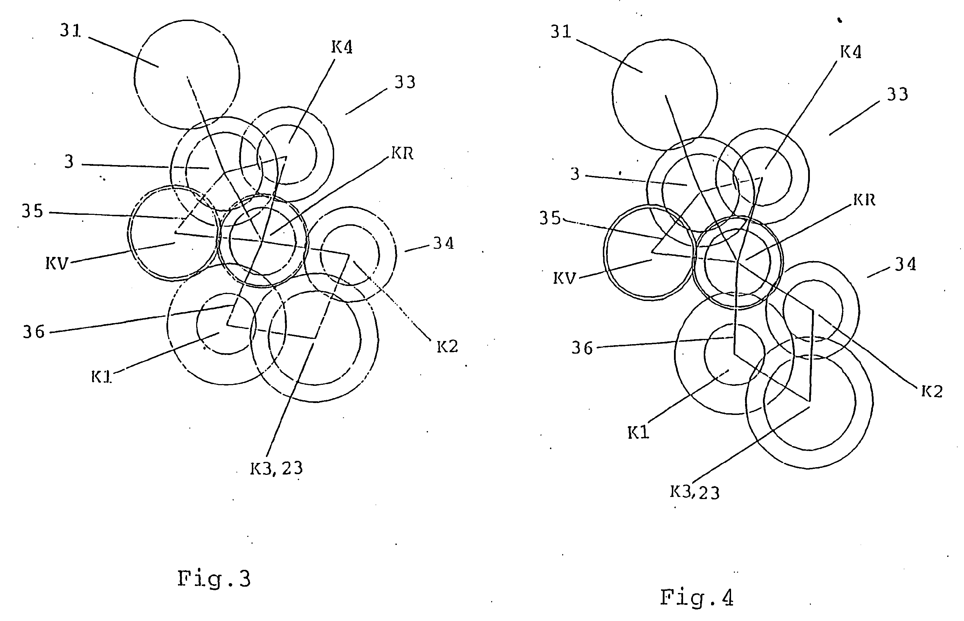

In Fig. 3 ist die räumliche Aufteilung der Wellen des erfindungsgemäßen Wendegetriebes schematisch dargestellt. Auf einer Seite des Umfangs der Antriebswelle 3 sind die Vorgelegeeinheiten des Vorwärtsgangs KV, die des Rückwärtsgangs KR und des vierten Gangs K4 angeordnet, die die Wendegetriebeeinheit 33 bilden. Die Vorgelegeeinheit KR ist zwischen den Vorgelegeeinheiten KV und K4 angeordnet. Die andere Seite der Antriebswelle 3 bleibt frei. Die Vorgelegeeinheit K4 kann bei diesem Aufbau leicht aus der Anordnung entfernt werden.

Auf der freien Seite der Vorgelegeeinheit des Rückwärtsgangs KR schließen sich die Vorgelegeeinheiten der Ganggetriebeeinheit 34 an. Dabei ist die Vorgelegeeinheit K3 mit der Abtriebswelle 23 zwischen den Vorgeleeeinheiten K1 und K2 gelegen. Die Ganggetriebeeinheit 34, liegt demnach bezogen auf die Antriebswelle 3 hinter der Wendegetriebeeinheit 33.

Auf der den Getriebeeinheiten 33 und 34 gegenüberliegenden freien Seite der Antriebswelle 3 ist ein Nebenantrieb 31 angeordnet. Ein zweiter Nebenantrieb kann anstelle der Vorgelegeeinheit K4 vorgesehen werden, der in der Zeichnung nicht dargestellt ist.

Die Achsen der Wellen der Wendegetriebeeinheit KV, KR, K4 und die Antriebswelle 3 bilden ein Viereck 35 und die Achsen der Wellen der Ganggetriebeeinheit K1, K2, K3 und die Welle der Vorgelegeeinheit des Rückwärtsgangs KR bilden ein weiteres Viereck 36. Je nach den besonderen Anforderungen an das Wendegetriebe beim Einbau in ein bestimmtes Fahrzeug können die einzelnen Vorgelegeeinheiten zueinander verschoben werden, wobei die beiden Vierecke 35 und 36 ihre Winkel verändern.

In Fig. 3 ist eine Wellenanordnung mit kurzem Achsabstand zwischen der Antriebswelle 3 und der Abtriebswelle 23 dargestellt. In Fig. 4 ist dagegen eine Wellenanordnung mit langem Achsabstand gezeigt. Bei dieser Ausführungsform des erfindungsgemäßen Wendegetriebes ist das Viereck 36 gegenüber der Ausführungsform in Figur 2 in die Länge gezogen. Dadurch entfernt sich die Abtriebswelle 23 und damit die Vorgelegeeinheit des dritten Gangs K3 von der Vorgelegeeinheit des Rückwärtsgangs KR und es entsteht ein größerer Achsabstand.

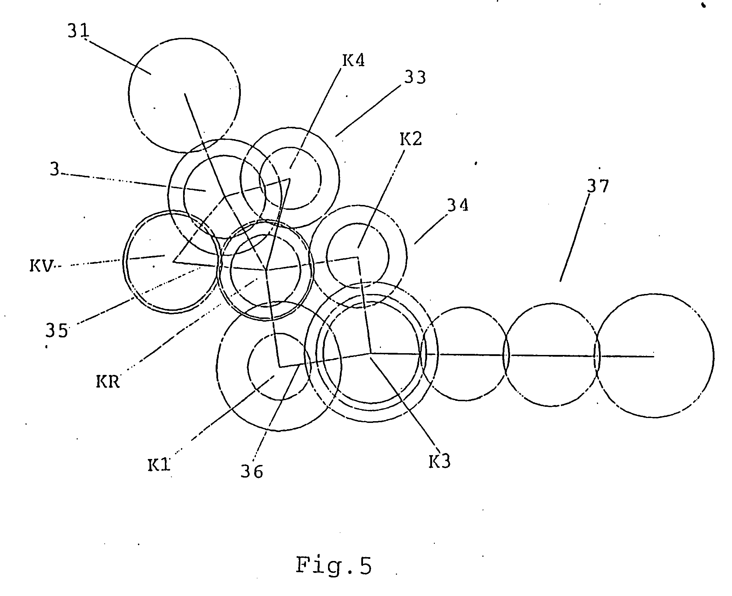

In Fig. 5 ist ein Wendegetriebe dargestellt, das zur Überbrückung großer Distanzen mit einem Achsverteilergetriebe 37 versehen ist. In der dargestellten Form weist das Achsverteilergetriebe vier Wellen auf. Es sind jedoch beliebige andere Bauweisen von Achsverteilergetrieben einsetzbar.

Ferner ist es möglich, die Ganggetriebeeinheit, die an die Vorgelegeeinheit KR anschließt, innerhalb des freien Raums auf dem Umfang der Vorgelegewelle 5 zu schwenken. In gleicher Weise kann die Wendegetriebeeinheit 33 entlang dem Umfang der Antriebswelle 3 geschwenkt werden. Beispielsweise ist in Fig. 4 die Ganggetriebeeinheit 34 in Richtung der Vorgelegeeinheit K4 gedreht angeordnet. Auf diese Weise kann das erfindungsgemäße Wendegetriebe leicht an bauliche Besonderheiten eines Fahrzeugs angepaßt werden.

### Bezugszeichen

- 1: Wendegetriebe
- 2: Drehmomentwandler
- 3: Antriebswelle
- 4: Festrad
- 5: Vorgelegewelle
- 6: Vorgelegewelle
- 7: Vorgelegewelle
- 8: Vorgelegewelle
- 9: Vorgelegewelle
- 10: Losrad
- 11: Kupplungselement
- 12: Festrad
- 13: Festrad
- 14: Losrad
- 15: Kupplungselement
- 16: Festrad
- 17: Losrad
- 18: Kupplungselement
- 19: Festrad
- 20: Losrad
- 21: Kupplungselement
- 22: Festrad
- 23: Abtriebswelle
- 24: Kupplungselement
- 25: Festrad
- 26: Losrad
- 27: Losrad
- 28: Kupplungselement
- 29: Festrad
- 30: Hohlwelle
- 31: Nebenantrieb
- 32: Hydraulikpumpe
- 33: Wendegetriebeeinheit
- 34: Ganggetriebeeinheit
- 35: Viereck
- 36: Viereck
- 37: Achsverteilergetriebe

- KV: Vorgelegeeinheit Vorwärtsgang
- KR: Vorgelegeeinheit Rückwärtsgang
- K1: Vorgelegeeinheit erster Gang
- K2: Vorgelegeeinheit zweiter Gang
- K3: Vorgelegeeinheit dritter Gang
- K4: Vorgelegeeinheit vierter Gang
- AN: Antriebswelle

## Patentansprüche

1. Lastschaltbares, mehrgängiges Wendegetriebe mit einer Antriebswelle (3), einer Abtriebswelle (23) und mehreren Vorgelegewellen (5, 6, 7, 8, 9) mit auf diesen verteilten Losrädern (10, 14, 17, 20, 26, 27) Festrädern (4, 12, 13, 16, 19, 22, 25, 29) und Schaltkupplungen (11, 15, 18, 21, 24, 28) die eine Vorgelegeeinheit für den Vorwärtsgang (KV), eine Vorgelegeeinheit für den Rückwärtsgang (KR), eine Vorgelegeeinheit für den ersten Gang (K1), eine Vorgelegeeinheit für den zweiten Gang (K2), eine Vorgelegeeinheit für den dritten Gang (K3) und eine Vorgelegeeinheit für den vierten Gang (K4) zur Gang- und Richtungsschaltung bilden, **dadurch gekennzeichnet, dass** die Vorgelegeeinheit für den Vorwärtsgang (KV), die Vorgelegeeinheit für den Rückwärtsgang (KR) und die Vorgelegeeinheit für den vierten Gang (K4) eine Wendegetriebeeinheit (33) bilden und die Vorgelegeeinheit für den ersten Gang (K1), die Vorgelegeeinheit für den zweiten Gang (K2) und die Vorgelegeeinheit für den dritten Gang (K3) eine Ganggetriebeeinheit (34) bilden, wobei die Wendegetriebeeinheit an einer beliebigen Seite in Umfangsrichtung der Antriebswelle (3) vorgesehen ist und die Ganggetriebeeinheit (34) an die Wendegetriebeeinheit (33) anschließt, sodass die Wendegetriebeeinheit (33) und die Ganggetriebeeinheit (34) bezogen auf die Antriebswelle (3) hintereinander auf einer Seite in Umfangsrichtung der Antriebswelle angeordnet sind.

2. Wendegetriebe nach Anspruch 1, **dadurch gekennzeichnet, dass** die Ganggetriebeeinheit (34) an einer beliebigen freien Stelle am Umfang der Vorgelegewelle (5) eines Rückwärtsganges (KR) vorgesehen ist.

3. Wendegetriebe nach Anspruch 1 oder 2, **dadurch gekennzeichnet, dass** die Wellen (5, 6, 9) der Wendegetriebeeinheit (33) und die Antriebswelle (3) ein Viereck (35) und die Wellen (7, 8, 23) der Ganggetriebeeinheit (34) und eine Welle der Wendegetriebeeinheit (33) ein weiteres Viereck (36) bilden, wobei die Achsen der Wellen (5, 6, 9, 7, 8, 23) die Eckpunkte der Vierecke (35, 36) bilden wobei die Winkel der Vierecke (35, 36) veränderlich sind.

4. Wendegetriebe nach einem der vorhergehenden Ansprüche, **dadurch gekennzeichnet, dass** an die Abtriebswelle (23) ein Achsverteilergetriebe (37) anschließbar ist.

5. Wendegetriebe nach einem der vorhergehenden Ansprüche, **dadurch gekennzeichnet, dass** die Vorgelegeeinheit eines vierten Gangs (K4) unabhängig von den übrigen Vorgelegeeinheiten neben der Antriebswelle (3) angeordnet ist.

6. Wendegetriebe nach einem der vorhergehenden Ansprüche, **dadurch gekennzeichnet, dass** die Vorgelegeeinheit eines vierten Gangs (K4) ohne weitere Veränderungen aus dem Wendegetriebe (1) herausnehmbar ist.

7. Wendegetriebe nach einem der vorhergehenden Ansprüche, **dadurch gekennzeichnet, dass** parallel neben der Antriebswelle (3) ein Nebenabtrieb (31) angeordnet ist.

8. Wendegetriebe nach einem der vorhergehenden Ansprüche, **dadurch gekennzeichnet, dass** der Nebenantrieb (31) motorabhängig ist.

9. Wendegetriebe nach einem der vorhergehenden Ansprüche, **dadurch gekennzeichnet, dass** an Stelle der Vorgelegeeinheit des vierten Gangs (K4) ein Nebenabtrieb vorsehbar ist.

## Claims

1. Multi-gear powershift reversing transmission with a drive input shaft (3), with a drive output shaft (23) and with a plurality of countershafts (5, 6, 7, 8, 9) having distributed thereon loose wheels (10, 14, 17, 20, 26, 27), fixed wheels (4, 12, 13, 16, 19, 22, 25, 29) and shift clutches (11, 15, 18, 21, 24, 28) which form a reduction unit for the forward gear (KV), a reduction unit for the reverse gear (KR), a reduction unit for the first gear (K1), a reduction unit for the second gear (K2), a reduction unit for the third gear (K3) and a reduction unit for the fourth gear (K4) for gear shifting and direction changing, **characterized in that** the reduction unit for the forward gear (KV), the reduction unit for the reverse gear (KR) and the reduction unit for the fourth gear (K4) form a reversing transmission unit (33) and the reduction unit for the first gear (K1), the reduction unit for the second gear (K2) and the reduction unit for the third gear (K3) form a gear transmission unit (34), with the reversing transmission unit being provided on any desired side in the circumferential direction of the drive input shaft (3), and with the gear transmission unit (34) adjoining the reversing transmission unit (33), such that the reversing transmission unit (33) and the gear transmission unit (34) are arranged, in relation to the drive input shaft (3), one behind the other on one side in the circumferential direction of the drive input shaft.

2. Reversing transmission according to Claim 1, **characterized in that** the gear transmission unit (34) is provided at any desired free location on the circumference of the countershaft (5) of a reverse gear (KR).

3. Reversing transmission according to Claim 1 or 2, **characterized in that** the shafts (5, 6, 9) of the reversing transmission unit (33) and the drive input shaft (3) form one tetragon (35) and the shafts (7, 8, 23) of the gear transmission unit (34) and a shaft of the reversing transmission unit (33) form a further tetragon (36), with the axes of the shafts (5, 6, 9, 7, 8, 23) forming the corner points of the tetragons (35, 36) and with the angles of the tetragons (35, 36) being variable.

4. Reversing transmission according to one of the preceding claims, **characterized in that** an axle transfer box (37) can be connected to the drive output shaft (23).

5. Reversing transmission according to one of the preceding claims, **characterized in that** the reduction unit of a fourth gear (K4) is arranged adjacent to the drive input shaft (3) independently of the other reduction units.

6. Reversing transmission according to one of the preceding claims, **characterized in that** the reduction unit of a fourth gear (K4) can be removed from the reversing transmission (1) without any other changes being made.

7. Reversing transmission according to one of the preceding claims, **characterized in that** an auxiliary drive output (31) is arranged adjacent and parallel to the drive input shaft (3).

8. Reversing transmission according to one of the preceding claims, **characterized in that** the auxiliary drive output (31) is engine-dependent.

9. Reversing transmission according to one of the preceding claims, **characterized in that** an auxiliary drive output can be provided instead of the reduction unit of the fourth gear (K4).

## Revendications

1. Transmission réversible sous charge, à plusieurs vitesses, comprenant un arbre d'entraînement (3), un arbre de sortie (23) et plusieurs arbres intermédiaires (5, 6, 7, 8, 9) avec, répartis sur ceux-ci, des pignons fous (10, 14, 17, 20, 26, 27), des pignons fixes (4, 12, 13, 16, 19, 22, 25, 29) et des embrayages de commande (11, 15, 18, 21, 24, 28) qui forment une unité intermédiaire pour la vitesse de marche avant (KV), une unité intermédiaire pour la vitesse de marche arrière (KR), une unité intermédiaire pour la première vitesse (K1), une unité intermédiaire pour la deuxième vitesse (K2), une unité intermédiaire pour la troisième vitesse (K3) et une unité intermédiaire pour la quatrième vitesse (K4), pour le changement de vitesse et de direction, **caractérisée en ce que** l'unité intermédiaire pour la vitesse de marche avant (KV), l'unité intermédiaire pour la vitesse de marche arrière (KR) et l'unité intermédiaire pour la quatrième vitesse (K4) forment une unité de transmission réversible (33), et l'unité intermédiaire pour la première vitesse (K1), l'unité intermédiaire pour la deuxième vitesse (K2) et l'unité intermédiaire pour la troisième vitesse (K3) forment une unité de transmission de vitesse (34), l'unité de transmission réversible étant prévue sur un côté quelconque dans la direction périphérique de l'arbre d'entraînement (3) et l'unité de transmission de vitesse (34) se raccordant à l'unité de transmission réversible (33), de sorte que l'unité de transmission réversible (33) et l'unité de transmission de vitesse (34) soient disposées, par rapport à l'arbre d'entraînement (3), l'une derrière l'autre d'un côté dans la direction périphérique de l'arbre d'entraînement.

2. Transmission réversible selon la revendication 1, **caractérisée en ce que** l'unité de transmission de vitesse (34) est prévue à un endroit libre quelconque sur la périphérie de l'arbre intermédiaire (5) d'une vitesse de marche arrière (KR).

3. Transmission réversible selon la revendication 1 ou 2, **caractérisée en ce que** les arbres (5, 6, 9) de l'unité de transmission réversible (33) et l'arbre d'entraînement (3) forment un quadrilatère (35) et les arbres (7, 8, 23) de l'unité de transmission de vitesse (34) et un arbre de l'unité de transmission réversible (33) forment un autre quadrilatère (36), les axes des arbres (5, 6, 9, 7, 8, 23) formant les coins des quadrilatères (35, 36), les angles des quadrilatères (35, 36) étant variables.

4. Transmission réversible selon l'une quelconque des revendications précédentes, **caractérisée en ce qu'**une boîte de transfert d'axe (37) peut être raccordée à l'arbre de sortie (23).

5. Transmission réversible selon l'une quelconque des revendications précédentes, **caractérisée en ce que** l'unité intermédiaire d'une quatrième vitesse (K4) est disposée à côté de l'arbre d'entraînement (3) indépendamment des autres unités intermédiaires.

6. Transmission réversible selon l'une quelconque des revendications précédentes, **caractérisée en ce que** l'unité intermédiaire d'une quatrième vitesse (K4) peut être ressortie de la transmission réversible (1) sans autre modification.

7. Transmission réversible selon l'une quelconque des revendications précédentes, **caractérisée en ce que** l'on dispose une sortie auxiliaire (31) en parallèle à côté de l'arbre d'entraînement (3).

8. Transmission réversible selon l'une quelconque des revendications précédentes, **caractérisée en ce que** la sortie auxiliaire (31) dépend du moteur.

9. Transmission réversible selon l'une quelconque des revendications précédentes, **caractérisée en ce que** l'on peut prévoir au lieu de l'unité intermédiaire de la quatrième vitesse (K4) une sortie auxiliaire.
